(19) Europäisches Patentamt
European Patent Office
Office européen des brevets

(11) **EP 1 953 504 B1**

(12) **EUROPÄISCHE PATENTSCHRIFT**

(45) Veröffentlichungstag und Bekanntmachung des Hinweises auf die Patenterteilung:
**13.11.2013 Patentblatt 2013/46**

(51) Int Cl.:
*G01D 5/30* (2006.01)     *G01C 3/08* (2006.01)
*G01B 11/14* (2006.01)     *G01D 5/26* (2006.01)

(21) Anmeldenummer: **08000124.1**

(22) Anmeldetag: **04.01.2008**

(54) **Verfahren zur Erfassung eines Gegenstands und optoelektronische Vorrichtung**

Method for recording an object and optoelectronic device

Procédé de saisie optique d'un objet et dispositif optoélectronique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.01.2007 DE 102007004632**

(43) Veröffentlichungstag der Anmeldung:
**06.08.2008 Patentblatt 2008/32**

(73) Patentinhaber: **SICK AG**
**79183 Waldkirch/Breisgau (DE)**

(72) Erfinder:
• **Waslowski, Kai**
**79312 Emmendingen (DE)**
• **Merettig, Gerhard**
**79350 Sexau (DE)**

(74) Vertreter: **Manitz, Finsterwald & Partner GbR**
**Postfach 31 02 20**
**80102 München (DE)**

(56) Entgegenhaltungen:
**FR-A- 2 761 151     JP-A- 2000 337 869**
**US-B1- 6 344 893**

## Beschreibung

Die vorliegende Erfindung betrifft ein Verfahren zur Erfassung eines Gegenstandes mittels einer optoelektronischen Vorrichtung, bei dem von einer Lichtquelle erzeugte Lichtstrahlen als Lichtfleck auf einen Gegenstand treffen und die vom Gegenstand rückgestreuten und/oder reflektierten Lichtstrahlen nach dem Triangulationsprinzip von einer Empfangsanordnung erfasst werden und eine Information über einen Tastabstand zwischen der Vorrichtung und dem Gegenstand umfassendes Gegenstandserfassungssignal ausgegeben wird, wobei die Lichtstrahlen in der Empfangsanordnung über ein abbildendes Element ein aus Fotodetektoren bestehendes Pixelarray beaufschlagen.

Darüber hinaus betrifft die vorliegende Erfindung eine optoelektronische Vorrichtung zur Erfassung eines Gegenstands nach dem Triangulationsprinzip.

Derartige Triangulationslichttaster und Verfahren werden eingesetzt, um eine Information über den Abstand eines in den Überwachungsbereich des Triangulationslichttasters gelangenden Gegenstandes zu erhalten. Ein von einer Lichtquelle ausgesendetes Strahlenbündel erzeugt auf dem sich im Strahlengang befindenden Gegenstand einen Lichtfleck begrenzten Durchmessers. Die vom Lichtfleck in Richtung des Triangulationslichttasters reflektierten oder rückgestreuten Strahlen treffen dort auf eine in der Regel seitlich neben der Lichtquelle angeordnete Empfängeroptik und werden von dieser mehr oder weniger scharf auf einen nachgeordneten Sensor abgebildet. Dabei hängt der Winkel, unter dem die reflektierten oder remittierten Lichtstrahlen auf die Empfängeroptik treffen, und daher auch die laterale Position, an der die Strahlen auf den Empfänger treffen, vom Abstand des Gegenstands vom Triangulationslichttaster ab. Aus dem Abstand des auf den Empfänger abgebildeten Lichtflecks von einem Bezugspunkt lässt sich mittels Triangulation unter Kenntnis des Abstands zwischen Empfängeroptik und Empfängerebene sowie von Lage und Richtung des von der Lichtquelle ausgesandten Strahlenbündels der Abstand des Gegenstands vom Triangulationslichttaster ermitteln.

Aus der US-Patentschrift 5,076,687 ist eine Vorrichtung bekannt, bei der von einem Objekt empfangenes Licht mittels einer Sammellinse und eines im Bildfeld der Sammellinse angeordneten Linsenarrays auf ein Fotodetektorenarray abgebildet wird.

Ein Verfahren gemäß dem Oberbegriff des Anspruchs 1 und eine entsprechende Vorrichtung sind aus FR 2 761 151 A1 bekannt.

Ein Abbildungsverfahren und eine entsprechende Vorrichtung, mit denen Informationen über den Abstand eines abzubildenden Gegenstands gewonnen werden können, sind in US 6,3544,893 B1 offenbart.

Bei Triangulationslichttastern herkömmlicher Bauart sind die Reichweite und die Entfernungsauflösung durch die Brennweite und die Lichtstärke der Empfängeroptik begrenzt. Das bedeutet, dass bei Triangulationslichttastern mit hoher Reichweite und einer guten Entfernungsauflösung Empfängeroptiken mit großer Brennweite und großem Durchmesser verwendet werden müssen.

Dadurch bedingt weisen entsprechende Triangulationstaster eine große Bauform, insbesondere eine große Bautiefe auf. Häufig ist jedoch in Abhängigkeit von der jeweiligen Applikation der für den Lichttaster zur Verfügung stehende Bauraum insbesondere in seiner Tiefe begrenzt.

Weiterhin besteht der Nachteil, dass die Fertigung von Optiken mit großem Durchmesser, d.h. großer Apertur, mit geringen, die Entfernungsauflösung nicht begrenzenden Abbildungsfehlern aufwändig und kostspielig ist.

Es ist daher die Aufgabe der vorliegenden Erfindung, ein Verfahren und eine Vorrichtung zur Erfassung eines Gegenstands zu bereitzustellen, welche hinsichtlich Reichweite, Auflösung und/oder Bautiefe verbessert sind.

Diese Aufgabe wird durch die Merkmale des Anspruchs 1 gelöst. Bei einem derartigen Verfahren ist das abbildende Element ausschließlich ein dem Pixelarray vorgeschaltetes Array von Einzelabbildungselementen, welches ein einer Mehrzahl von zueinander beabstandeten Abbildungen des Lichtflecks entsprechendes Empfangssignalmuster auf dem Pixelarray erzeugt. Die Information über den Tastabstand wird aus dem Empfangssignalmuster bestimmt.

Bei dem Verfahren wird die Information über den Tastabstand des Gegenstandes zur Vorrichtung nicht aus der Position eines einzigen Lichtflecks auf einem Pixelarray gewonnen, sondern aus einer Mehrzahl einzelner Abbildungen des Lichtflecks. An dieser Stelle wird darauf hingewiesen, dass mit dem Begriff "Position" im Allgemeinen die Position in Richtung der Triangulation gemeint ist, d.h. die Richtung, in der sich die Abbildungen des Lichtflecks bei einer Änderung des Tastabstandes verschieben.

Die Information über den Tastabstand des Gegenstands von der optoelektronischen Vorrichtung ist also nicht in der absoluten Lage eines einzelnen Lichtflecks enthalten, sondern ist über eine größere Fläche des Pixelarrays verteilt. Hierbei wirken sich lokale Störungen wie z.B. Halbleiterdefekte des Pixelarrays, entsprechend weniger aus.

Ein weiterer Vorteil besteht darin, dass sich ein von dem Array von Einzelabbildungselementen erzeugtes Empfangssignalmuster, welches von passiven oder aktiven Lichtquellen außerhalb des Strahlengangs der Lichtquelle stammt, von jenen Empfangssignalmustern unterscheidet, die durch Gegenstände innerhalb des Überwachungsbereichs erzeugt werden können. Dieser Vorteil wird nachfolgend noch näher erläutert.

Noch ein weiterer Vorteil liegt darin begründet, dass die von sich sehr nahe am Triangulationslichttaster befindenden Objekten stammenden Lichtfleckabbildungen aufgrund des schrägen Einfalls auf das Array von Einzelabbildungselementen nur noch teilweise auf das Pixelarray auftreffen. Da die Intensität der Lichtfleckabbildungen derartiger, sich im so genannten Nahbereich befindender Objekte üblicherweise größer ist als diejenige von weiter entfernten, d.h. sich im so genannten Fernbereich befindenden Objekten, wird durch die Reduzierung der Anzahl der auf das Pixelarray auftreffenden Lichtfleckabbildungen die auftreffende Gesamtlichtmenge wieder reduziert. Dadurch können die durch den geringeren Abstand bedingte höhere Intensität der Einzellichtflecke ausgeglichen und somit die Dynamikanforderungen an das Pixelarray und nachgeschaltete Auswertungsschaltungen reduziert werden.

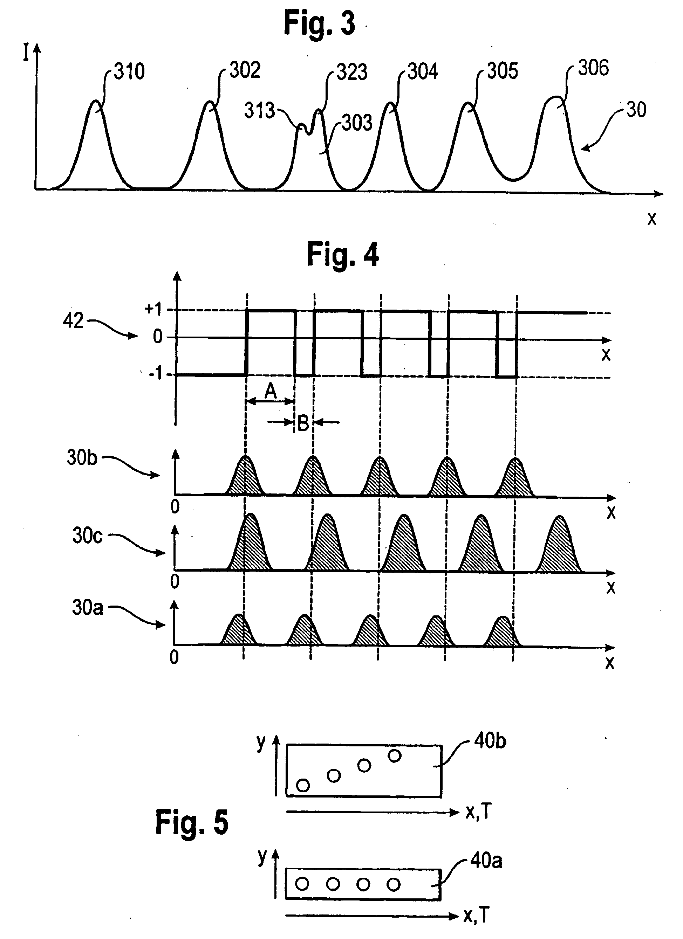

Erfindungsgemäß wird bei einem Referenztastabstand ein Referenzsignalmuster mit mehreren Abbildungen des Lichtflecks entsprechenden Maxima aufgenommen, aus dem eine Modulationsfunktion berechnet wird, welche einen positiven und einen negativen Wert annehmen kann, wobei ein Wechsel von einem negativen zu einem positiven Wert an einer Position erfolgt, an der das Referenzsignalmuster ein Maximum aufweist, und ein Wechsel von einem positiven zu einem negativen Wert an einer Position erfolgt, die zwischen diesem Maximum und einem benachbarten Maximum liegt und durch einen Bruchteil des Abstandes der beiden Maxima bestimmt ist. Dann wird das Produkt des Empfangssignalmusters mit der Modulationsfunktion berechnet werden, woraufhin die Summe oder das Integral über das Produkt für ein vorgebbares Intervall von Positionen berechnet wird. Aus dieser Summe oder diesem Integral wird dann der Tastabstandswert berechnet. Alternativ wird aus dem Vorzeichen der Summe oder des Integrals ein Unterschreiten und/oder Überschreiten eines insbesondere durch den Referenztastabstand vorgegebenen Tastabstandsschwellenwerts ermittelt. Auf diese Variante wird bei Beschreibung der Figur 4 nachstehend noch näher eingegangen.

Vorteilhaft ist, wenn Abbildungen des Lichtflecks, die in ihrer Intensitätsverteilung von einem vorgegebenen Muster abweichen, ermittelt werden. Es wird also festgestellt, ob eine Abbildung in ihrer Intensitätsverteilung einer beispielsweise durch ein Referenzmuster vorgegebenen Intensitätsverteilung entspricht.

Die von dem Muster abweichenden Abbildungen des Lichtflecks können dann bei der Bestimmung der Information über den Tastabstand nicht oder nur mit einer verminderten Gewichtung berücksichtigt werden. So können Störlichteinflüsse durch Fremdlicht oder sich außerhalb des Strahlengangs der Sendelichtquelle befindenden Gegenstände oder auch nicht ideal remittierende Objekte, wie zum Beispiel Objekte mit Kontrastunterschieden auf der Oberfläche oder spiegelnden Oberflächen, identifiziert werden. Dadurch wird die Gefahr einer Fehlberechnung des Tastabstands aufgrund von Artefakten vermieden oder zumindest verringert. Gemäß einer bevorzugten Variante der Erfindung wird bei Überschreitung eines vorgegebenen Grenzwerts für das zulässige Maß an von dem Muster abweichenden Abbildungen des Lichtflecks eine Fehlermeldung ausgegeben und/oder eine Ausgabe eines Gegenstandserfassungssignals unterbleibt solange, bis das zulässige Maß an von dem Muster abweichenden Abbildungen wieder unterschritten ist. Die genannten Maßnahmen werden also in Abhängigkeit von dem Grad an Artefakten getroffen, der gerade noch als zulässig erachtet wird. Dadurch ist es möglich, die Störungstoleranz an die jeweilige Applikation, die Umgebungsbedingungen und/oder die Oberflächeneigenschaften der zu erfassenden Gegenstände anzupassen.

Bei einer weiteren vorteilhaften Ausgestaltung des Verfahrens ist das Pixelarray ein zweidimensionales Array und ein Einzelabbildungselement umfasst jeweils ein Prisma, wobei die Ablenkrichtung der Prismen senkrecht zu einer durch die Sende- und Empfangsstrahlen definierten Triangulationsebene ist und der Betrag der Ablenkung für jedes Einzelabbildungselement unterschiedlich ist. Eine Abbildung kann dann aufgrund ihrer Position senkrecht zur Triangulationsrichtung einem Einzelabbildungselement zugeordnet werden. Zudem ist eine bessere Trennung der erzeugten Lichtflecke möglich, da ihr wechselseitiger Abstand durch die Ablenkung senkrecht zur Triangulationsrichtung vergrößert wird.

Die Aufgabe der Erfindung wird weiterhin durch eine optoelektronische Vorrichtung mit den Merkmalen des Anspruchs 7 gelöst.

Eine derartige Vorrichtung arbeitet nach den vorstehend bereits erläuterten Funktionsprinzipien.

Bevorzugt ist das Array von Einzelabbildungselementen ein eine Mehrzahl von Einzellinsen umfassendes Mikrolinsenarray. Bei einem derartigen Mikrolinsenarray werden die Einzelabbildungselemente durch eine Anzahl von kleinen dünnen Linsen gebildet, wobei es nicht erforderlich ist, die Strahlengänge der Einzellinsen gegeneinander abzuschirmen. Daher brauchen auch keine Stege oder dergleichen zwischen den einzelnen Linsen vorgesehen werden.

Derartige Mikrolinsenarrays lassen sich auf einfache und kostengünstige Weise herstellen, beispielsweise durch Heißprägen. Aufgrund der geringen erforderlichen Dicke im Vergleich mit der Herstellung entsprechend großer und dicker Einzellinsen für einen herkömmlichen Lichttaster lässt sich der Durchsatz einer hierzu verwendeten Spritzgussmaschine erhöhen, da die notwendigen Abkühlungszeiten aufgrund der geringeren Dicke gegenüber großflächigen Einzellinsen verkürzt ist. Die Herstellung eines derartigen Mikrolinsenarrays mit vielen kleinen Einzellinsen mit einer in der Summe gleichen optischen Öffnung wie bei einer großen Einzellinse ist somit kostengünstiger.

In einer vorteilhaften Ausführungsform der Erfindung umfasst das Array von Einzelabbildungselementen ein Array von diffraktiven Einzelelementen, welches insbesondere als eine Folie ausgebildet ist. Derartige Arrays, die zum Beispiel auf dem Prinzip der Fresnel-Zonenplatte beruhen, sind besonders kostengünstig zu fertigen und zeichnen sich durch ihre geringe Dicke aus.

Sie können insbesondere bei der Verwendung von monochromatischen Lichtquellen eingesetzt werden.

Gemäß einer bevorzugten Ausführungsform der Erfindung weisen die Einzelabbildungselemente unterschiedliche Brennweiten auf. Dadurch ist es möglich, genau eine Abbildung des Lichtflecks in der Empfängerebene scharf abzubilden. Der jeweils scharf abgebildete Lichtfleck lässt sich aus der Form der Intensitätsverteilung ermitteln. So können Lichtflecke, die bei einem bestimmten Tastabstand gerade scharf abgebildet werden, stärker gewichtet werden als andere Lichtflecke oder unscharfe Lichtfleckabbildungen können ausgeblendet werden. Hierdurch wird die Detektion von nicht ideal remittierenden Objekten wie z.B. Objekten mit Kontrastunterschieden auf der Oberfläche oder spiegelnden Oberflächen verbessert. Die Ausblendung oder unterschiedliche Gewichtung derartiger Lichtflecke ist beispielsweise durch eine Anpassung der vorstehend erwähnten Modulationsfunktion möglich.

Es ist vorteilhaft, wenn ein Einzelabbildungselement jeweils ein Prisma umfasst. Dadurch lässt sich neben der Fokussierung eines Lichtflecks auch eine seitliche Ablenkung erzielen. Beispielsweise kann dadurch der wechselseitige Abstand der Lichtfleckabbildungen vergrößert werden, wodurch sich die Auflösung des Lichttasters verbessern lässt.

Gemäß einer bevorzugten Ausführungsform der Erfindung ist das Array von Einzelabbildungselementen eindimensional und erstreckt sich in Richtung der Triangulation. Es ist aber auch möglich, das Array von Einzelabbildungselementen zweidimensional zu gestalten, wodurch eine höhere Empfindlichkeit erreicht wird. Ein zweidimensionales Array ist insbesondere dann sinnvoll, wenn mit der vorstehend genannten seitlichen Ablenkung der Lichtflecke gearbeitet wird.

Das Pixelarray ist jedoch bevorzugt eindimensional. Hierdurch ist der Einsatz von sehr kostengünstigen Pixelarrays, z.B. Zeilensensoren, möglich.

Alternativ kann das Pixelarray zweidimensional sein, wodurch eine verbesserte Empfindlichkeit der Vorrichtung gewährleistet ist. Gemäß bevorzugten Ausführungsformen kann das Pixelarray ein Fotodiodenarray oder ein CCD-Sensor oder ein CMOS-Sensor sein. Ein zweidimensionales Pixelarray ist wiederum insbesondere dann sinnvoll, wenn mit der vorstehend genannten seitlichen Ablenkung der Lichtflecke gearbeitet wird.

Weitere bevorzugte Ausführungsformen der Erfindung sind in den abhängigen Ansprüchen, der Beschreibung sowie der Zeichnung genannt.

Die Erfindung wird im Folgenden anhand eines Ausführungsbeispiels unter Bezug auf die Zeichnungen erläutert. In diesen zeigen:

Fig. 1    eine schematische Darstellung eines erfindungsgemäßen Triangulationslichttasters mit rückstreuenden Gegenständen in drei verschiedenen Abständen,

Fig. 2    eine schematische Darstellung des Triangulationslichttasters von Fig. 1 mit einem rückstreuenden Gegenstand und einer Störlichtquelle,

Fig. 3    ein von einem Array von Einzelabbildungselementen erzeugtes Empfangssignalmuster,

Fig. 4    drei bei unterschiedlichen Tastabständen erzeugte Empfangssignalmuster sowie eine aus einem Empfangssignalmuster erzeugte Modulationsfunktion, und

Fig. 5    zwei durch unterschiedliche Arrays von Einzelabbildungselementen erzeugte zweidimensionale Empfangssignalmuster.

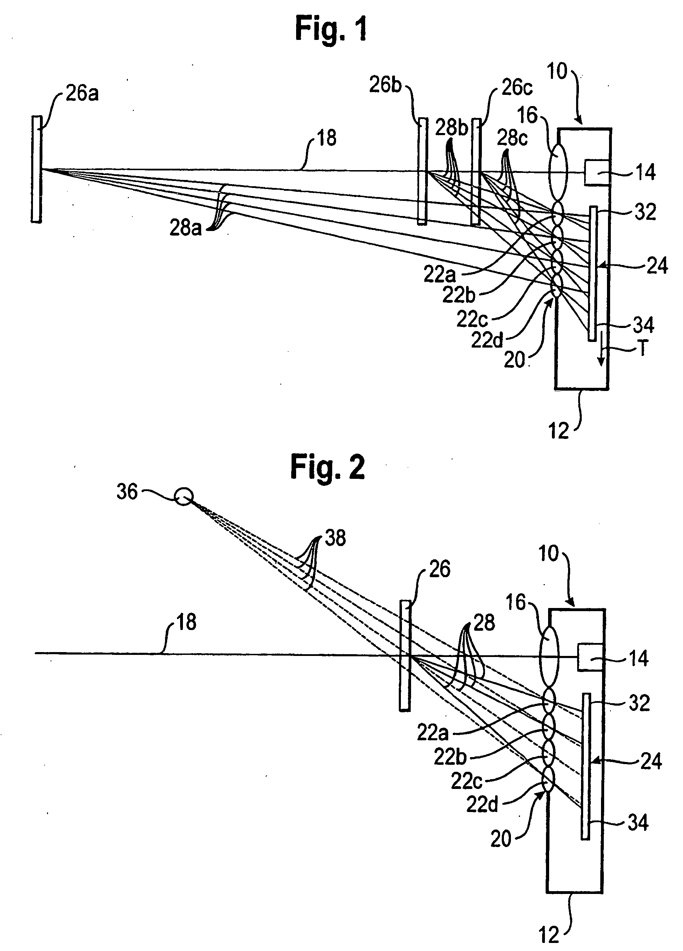

Fig. 1 zeigt schematisch einen Triangulationslichttaster 10, dessen Komponenten in einem gemeinsamen Gehäuse 12 untergebracht sind. Eine Lichtquelle 14 erzeugt Lichtstrahlen, die von einer Sendeoptik 16 zu einem Sendestrahlenbündel 18 fokussiert werden. Bei dem Sendestrahlenbündel 18 handelt es sich bevorzugt um ein paralleles Strahlenbündel, welches einen begrenzten Querschnitt aufweist, so dass beim Auftreffen auf Gegenstände annähernd punktförmige Lichtflecke erzeugt werden.

Als Lichtquelle 14 eignen sich Glühlampen, LEDs oder sonstige Strahlenquellen. Insbesondere kann als Lichtquelle 14 ein Laser vorgesehen werden, der ein Sendestrahlenbündel 18 mit sehr geringer Divergenz erzeugt und ein Weglassen der Sendeoptik 16 erlaubt. Zur Begrenzung des Querschnitts des Sendestrahlenbündels 18 können zusätzliche, nicht dargestellte Blenden vorgesehen sein.

Unterhalb der Sendeoptik 16 ist ein Mikrolinsenarray 20 angeordnet, welches vier zeilenförmig angeordnete Einzellinsen 22a, 22b, 22c, 22d umfasst. Selbstverständlich kann die Zahl der Einzellinsen 22a bis 22d wesentlich größer sein, wobei die Beschränkung auf vier Linsen in der Figur lediglich aus Gründen der Übersichtlichkeit erfolgt.

Im Inneren des Gehäuses 12 ist weiterhin ein Pixelarray 24 angeordnet, welches die von dem Mikrolinsenarray 20 erzeugten Abbildungen erfasst. Das Pixelarray 24 ist hier nur schematisch dargestellt. Es kann sich hierbei beispielsweise um ein Array von Fotodioden, um einen CCD-Sensor oder um einen CMOS-Sensor handeln, wobei diese wiederum als eindimensionale Zeilensensoren oder als zweidimensionale Arrays ausgebildet sein können. Die Anzahl der Einzelbildelemente bzw. Pixel des Pixelarrays übertrifft die Anzahl der Einzellinsen des Mikrolinsenarrays 20 um ein Mehrfaches, um eine ausreichende Auflösung zu gewährleisten.

Die Abmessung des Pixelarrays 24 in einer durch einen Richtungspfeil angegebenen Triangulationsrichtung T, d.h. der Verschiebungsrichtung der Abbildungen bei einer Änderung des Tastabstands, ist größer als die entsprechende Ausdehnung des Mikrolinsenarrays 20, damit auch schräg durch das Mikrolinsenarray 20 tretende Strahlen zumindest zum Teil noch erfasst werden.

Im Strahlengang des Sendestrahlenbündels 18 sind an drei verschiedenen Positionen angeordnete Gegenstände 26a, 26b, 26c dargestellt. Diese Gegenstände 26a bis 26c weisen ideal rückstreuende Oberflächen auf, d.h. das auftreffende, aus parallelen Strahlen bestehende Sendestrahlenbündel 18 erzeugt auf den Gegenständen 26a bis 26c einen mehr oder weniger punktförmigen Lichtfleck.

Es wird vereinfacht angenommen, dass die zuvor parallelen Sendestrahlen 18 zumindest innerhalb eines bestimmten Raumwinkels gleichmäßig in Richtung auf den Triangulationslichttaster 10 zurückgestreut werden. Die von den Gegenständen 26a bis c jeweils rückgestreuten Strahlen 28a bis 28c treffen auf das Mikrolinsenarray 20 und werden durch die Einzellinsen 22a bis 22d auf das Pixelarray 24 abgebildet. Aus Gründen der Übersichtlichkeit sind in Fig. 1 und 2 nur die jeweils die Einzellinsen 22a bis 22d durchdringenden Mittelpunktstrahlen dargestellt.

Der Abstand zwischen dem Mikrolinsenarray 20 und dem Pixelarray 24 ist dabei so gewählt, dass ein sich in mittlerer Entfernung zum Mikrolinsenarray 20 befindender Gegenstand scharf abgebildet wird. Näher oder entfernter liegende Gegenstände, z.B. Gegenstand 26a oder 26c, liegen zumindest teilweise noch innerhalb des Tiefenschärfebereichs der Einzellinsen 22a bis 22d.

Wie bereits erwähnt, können die Einzellinsen 22a bis 22d des Mikrolinsenarrays 20 jedoch auch unterschiedliche Brennweiten aufweisen, so dass sich ein Gegenstand 26a bis 26c bei einem beliebigen Abstand immer zumindest annähernd im Fokuspunkt zumindest einer Einzellinse 22a bis 22d befindet.

Die von dem Mikrolinsenarray 20 auf dem Pixelarray 24 erzeugten Empfangssignalmuster 30a, 30b, 30c für die verschiedenen Gegenstandspositionen sind in Fig. 4 dargestellt. In den Empfangssignalmustern 30a bis 30c ist die vom Pixelarray 24 erfasste Intensität I gegenüber einer Position x aufgetragen, wobei die Position x einem Ort auf dem Pixelarray 24 in Triangulationsrichtung T entspricht. Die in den Empfangssignalmustern 30a bis 30c ganz links dargestellten Peaks entsprechen jeweils den Abbildungen des Lichtflecks, die von der dem Sendestrahlenbündel 18 am nächsten liegenden Einzellinse 22a erzeugt wurden. Die sich rechts daran anschließenden Peaks wurden von der nächsten Einzellinse 22b erzeugt usw.

Die gestrichelten vertikalen Linien markieren in Fig. 4 jeweils die Positionen x, an denen im Empfangsmuster 30b jeweils ein Peak vorliegt.

Der gegenüber dem Gegenstand 26b näher am Triangulationslichttaster 10 liegende Gegenstand 26c erzeugt mit seinen rückgestreuten Strahlen 28c das Empfangssignalmuster 30c. Wie auch schon an den Strahlengängen in Fig. 1 zu erkennen ist, sind die Peaks des Empfangssignalmusters 30c nach rechts in Richtung größeren x verschoben, was in Fig. 1 einer Verschiebung nach unten, d.h. in Richtung der durch den Pfeil markierten Triangulationsrichtung T, entspricht.

Betrachtet man hingegen das von dem weiter entfernt liegenden Gegenstand 26a erzeugte Empfangssignalmuster 30a, so wird deutlich, dass die Peaks im Vergleich mit dem Empfangssignalmuster 30b nach links verschoben sind.

Weiterhin wird aus den Fig. 1 und 4 deutlich, dass der Betrag der Verschiebung der Peaks in den Empfangssignalmustern 30a bzw. 30c gegenüber dem Empfangssignalmuster 30b für eine von dem Sendestrahlenbündel 18 weiter entfernt liegende Einzellinse, d.h. Einzellinse 22d, größer ist als für eine näher am Sendestrahlenbündel 18 liegende Einzellinse, d.h. Einzellinse 22a.

Das Pixelarray 24 kann gemäß Fig. 1 in einen Fernbereich 32 und einen Nahbereich 34 aufgeteilt werden, wobei in dem Fernbereich 32 eher die von weiter entfernten Gegenständen, wie zum Beispiel Gegenstand 26a, rückgestreuten Strahlen 28a auftreffen und in dem Nahbereich 34 eher die von sich relativ nahe am Triangulationslichttaster 10 befindenden Gegenständen, wie zum Beispiel Gegenstand 26c rückgestreuten Strahlen 28c auftreffen.

Würde nun der Gegenstand 26c noch näher an den Triangulationslichttaster 10 herangerückt, würden die von den äußeren Einzellinsen, z.B. der Einzellinse 22d, erzeugten Abbildungen des Lichtflecks nicht mehr von dem Pixelarray 24 erfasst werden. Dadurch wird die mit abnehmendem Tastabstand zunehmende Intensität I der Abbildungen, die auch an der Höhe der Peaks in den Empfangssignalmustern 30a bis c von Fig. 4 zu erkennen ist und durch die Erfassung eines zunehmend größeren Raumwinkels bei kleineren Abständen bedingt ist, durch die abnehmende Zahl der vom Pixelarray 24 erfassten Abbildungen kompensiert.

Somit werden die Anforderungen an die Dynamik einer nicht dargestellten elektronischen Auswerteeinheit des Triangulationslichttasters 10, die bei herkömmlichen Lichttastern größer als $10^6$ sein kann, reduziert.

Ein Vorteil der vorliegenden Erfindung liegt darin, dass die Verteilung der Peaks in den Empfangssignalmustern nur von dem Tastabstand des erfassten Gegenstandes abhängt. Es ist also eine eindeutige Zuordnung eines Empfangssignalmusters zu einem Tastabstand möglich. Außerhalb des Sendestrahlenbündels 18 liegende Störstrahler werden auf dem Pixelarray 24 Empfangssignalmuster erzeugen, die mit keinem regulären Empfangssignalmuster übereinstimmen.

Dieser Sachverhalt soll anhand von Fig. 2 erläutert werden. Dort ist ein Triangulationslichttaster 10 gemäß Fig. 1 dargestellt. Das Sendestrahlenbündel 18 trifft auf einen Gegenstand 26 und wird über das Mikrolinsenarray 20 auf das Pixelarray 24 rückgestreut. Die zugehörigen rückgestreuten Strahlen 28 sind als durchgezogene Linien dargestellt.

Zusätzlich ist eine Störlichtquelle 36 vorhanden, deren Störlichtstrahlen 38 unter einem ähnlichen Winkel auf das Mikrolinsenarray 20 treffen wie die rückgestreuten Strahlen 28. Diese Störlichtstrahlen 38 sind gestrichelt dargestellt. Aus Fig. 2 wird ersichtlich, dass jedoch nur ein einziger auf die Einzellinse 22c treffender Störlichtstrahl 38 unter dem gleichen Winkel auf das Mikrolinsenarray 20 auftrifft, wie der entsprechende am Gegenstand 26 rückgestreute Strahl 28. Die übrigen Störlichtstrahlen 38 treffen gegenüber den rückgestreuten Strahlen 28 unter jeweils leicht unterschiedlichen Winkeln auf die Mikrolinsen 22a, 22b, 22d und erzeugen somit ein Empfangssignalmuster, das von dem durch den Gegenstand 26 erzeugten Empfangssignalmuster abweicht.

Aufgrund des Abstandes der Störlichtquelle 36 von der Achse des Sendestrahlenbündels 18 kann es keine Position innerhalb des durch das Sendestrahlenbündel 18 bestimmten Erfassungsbereiches geben, von der aus ein Gegenstand ein Empfangssignalmuster erzeugen könnte, das dem von der Störlichtquelle 36 erzeugten Empfangssignalmuster gleicht. Somit ist es möglich, derartige Störlichtsignalmuster eindeutig zu identifizieren und ggf. bei der Auswertung zu eliminieren.

Anhand eines in Fig. 3 dargestellten Empfangssignalmusters 30 soll die für eine korrekte Auswertung der Empfangsignalmuster erforderliche Trennung der einzelnen Abbildungen eines Lichtflecks erläutert werden. Bei dem in Fig. 3 dargestellten Empfangssignalmuster 30, welches insgesamt sechs Peaks oder Lichtfleckabbildungen 301 bis 306 umfasst, ist wiederum die Intensität I der Lichtfleckabbildungen gegen die Position x aufgetragen.

Die beiden ersten Lichtfleckabbildungen 301, 302 entsprechen idealen Lichtfleckabbildungen und sind durch ein deutlich erkennbares Minimum voneinander getrennt. Auch die Lichtfleckabbildung 303 ist von der benachbarten Lichtfleckabbildung 302 durch ein deutliches Minimum abgegrenzt, weist jedoch ein durch beispielsweise eine Defektstelle des Pixelarrays verursachtes Minimum auf, so dass die Lichtfleckabbildung 303 zwei Nebenmaxima 313, 323 besitzt. Der erfindungsgemäße Triangulationslichttaster 10 wird jedoch erkennen, dass der Abstand dieser Neben-maxima 313, 323 zu gering ist und wird daher die Lichtfleckabbildung 303 nicht in zwei einzelne Lichtflecke aufteilen.

Die Lichtfleckabbildung 304 weist eine reguläre Verteilung auf. Die Lichtflecke 305 und 306 besitzen jedoch eine etwas unregelmäßige Form und sind aufgrund eines weniger deutlich ausgebildeten Minimums geringfügig miteinander verschmolzen. Dieses Minimum ist jedoch ausreichend, um eine Trennung der beiden Lichtfleckabbildungen 305, 306 durchzuführen.

Zur Bestimmung des Tastabstandes zwischen der Vorrichtung und dem Gegenstand können grundsätzlich die folgenden drei Verfahrensvarianten zur Anwendung kommen.

In einer ersten, nicht beanspruchten Variante werden im Rahmen einer Einlernphase für mehrere vorgegebene Referenztastabstände jeweils Referenzsignalmuster mittels eines Testgegenstands mit möglichst ideal remittierender Oberfläche erzeugt. Diese Referenzsignalmuster werden zusammen mit dem zugehörigen Referenztastabstandswert gespeichert. Dieser Referenztastabstandswert stellt sozusagen einen Referenzwert für das entsprechende Signalmuster dar.

Die Abspeicherung der Referenzsignalmuster kann dabei zur Reduzierung des benötigten Speicherplatzes in komprimierter Form erfolgen. Die Anzahl der gespeicherten Referenzsignalmuster sollte den gesamten benötigten Erfassungsbereich des Triangulationslichttasters 10 abdecken und in hinreichend kleinen Tastabstandsschritten erfolgen.

In einem späteren, auf die Einlernphase folgenden Produktivbetrieb wird für ein aktuell aufgenommenes Empfangssignalmuster aus den gespeicherten Referenzsignalmustern das am besten passende Muster bestimmt. Dieser Mustervergleich kann nach in der Bildverarbeitung bekannten Methoden erfolgen. Insbesondere eignen sich hier Korrelationsverfahren.

Der Referenztastabstandswert des so ermittelten Musters wird als Tastabstandswert von der Auswerteinheit ausgegeben, wobei, wie bereits erwähnt, interpoliert werden kann.

In einer zweiten, nicht beanspruchten Verfahrensvariante werden in einem Empfangssignalmuster die Positionen der Abbildungen des Lichtflecks teilweise oder vollständig bestimmt, wobei wahlweise sowohl die Position des Maximums als auch die Position des Schwerpunkts einer Lichtfleckabbildung bestimmt werden kann. Die auf diese Weise bestimmten Positionen der Lichtfleckabbildungen werden jeweils derjenigen Einzellinse 22a bis 22d zugeordnet, welche die jeweilige Lichtfleckabbildung auf dem Pixelarray 24 erzeugt hat.

Aus diesen Positionen lässt sich nun jeweils ein Abstand zu jeweils einem bestimmten, ebenfalls der jeweiligen Einzellinse 22a bis 22d zugeordneten Bezugspunkt berechnen. Diese Bezugspunkte können unter Berücksichtung der Geometrie des Triangulationslichttasters 10, d.h. der relevanten Abstände der Komponenten wie Sendeoptik 16, Pixelarray 24 und Mikrolinsenarray 22 sowie der Brennweiten und Abstände der Einzellinsen 22a bis 22d, festgelegt werden. Die derselben Einzellinse zugeordneten Position einer Abbildung des Lichtflecks und eines Bezugspunktes bilden somit ein Koordinatenpaar, aus dessen Differenz der Tastabstand schließlich ebenfalls unter Berücksichtigung der Lichttastergeometrie berechnet wird.

Auf diese Weise erhält man also eine Vielzahl von Messwerten für den Tastabstand, aus denen der auszugebende Tastabstand durch Mittelung berechnet wird. Dabei können verschiedene Messwerte unterschiedlich gewichtet werden, wie nachstehend noch näher erläutert wird.

In einer Abwandlung dieser Verfahrensvariante können die Bezugspunkte durch die Positionen der Abbildungen eines im Rahmen eines Einlernvorgangs bei einem Referenztastabstand aufgenommenen Referenzsignalmusters festgelegt werden. Der Tastabstand wird hierbei unter Berücksichtigung des Referenztastabstands berechnet.

Bildlich gesprochen stellt diese Verfahrensvariante eine Mittelung über die mittels mehrerer Triangulationslichttaster ermittelte Abstandwerte dar, wobei bei dem erfindungsgemäßen Triangulationslichttaster 10 ein einzelner Lichttaster jeweils durch eine bestimmte Einzellinse gebildet ist. Auf diese Weise lassen sich äußere Störeinflüsse oder auch durch Defekte des Pixelarrays 24 verursachte Artefakte bei der Berechnung des Tastabstands unterdrücken. So ist es zum Beispiel möglich, den für den in Fig. 3 dargestellten Lichtfleck 303 ermittelten Abstand geringer zu gewichten als beispielsweise die Lichtfleckabbildungen 301, 302 oder 304. Bei einer noch größeren Abweichung von einem bekannten Muster kann die entsprechende Lichtfleckabbildung auch vollständig verworfen werden.

Aufgrund einer derartigen Plausibilitätsüberprüfung ist es möglich, bei zu großen Abweichungen eine Fehlermeldung auszugeben oder einen Wechsel eines Schaltzustands der Auswerteeinheit so lange zu unterdrücken, bis ein plausibles Signal zur Verfügung steht. Hier kann beispielsweise eine maximal zulässige Anzahl von nicht normgerechten Lichtfleckabbildungen vorgegeben werden, bei deren Überschreitung die Fehlermeldung ausgegeben wird.

Gemäß einer weiteren Abwandlung des vorstehend erläuterten Verfahrens werden nicht Abstände zu Bezugspunkten ermittelt. Stattdessen erfolgt die Tastabstandsbestimmung aus den Abständen der einzelnen Abbildungen des Lichtflecks innerhalb eines Empfangssignalmusters zueinander. Auch hier kann wiederum ein bei einem Referenztastabstand erzeugtes Referenzsignalmuster zugrunde gelegt werden.

Die Zuordnung der einzelnen Positionen der Abbildungen des Lichtflecks bzw. der Lichtfleckabbildungen zu einer bestimmten Einzellinse kann zum einen durch Abzählen der ermittelten Maxima und/oder Schwerpunkte erfolgen. Zum anderen ist es möglich, ein zweidimensionales Pixelarray 24 zu verwenden und die Einzellinsen 22a bis 22d des Mikrolinsenarrays 20 jeweils mit einem eigenen Prisma zu versehen, das eine für jede Einzellinse 22a bis 22d unterschiedliche Ablenkung senkrecht zur Triangulationsrichtung T bewirkt.

In Fig. 5 sind entsprechende Empfangssignalabbilder 40a, 40b dargestellt, die diese Maßnahme verdeutlichen. Das im unteren Teil von Fig. 5 dargestellte Empfangssignalabbild 40a, welches von einem zweidimensionalen Pixelarray 24 erzeugt wurde, zeigt eine Empfangssignalverteilung, wobei mit x die Position bzw. die erste Dimension des Pixelarrays 24 bezeichnet ist, welche mit der Triangulationsrichtung T übereinstimmt. Die y-Achse y bezeichnet die zweite Dimension des Pixelarrays 24. Wie zu erkennen ist, liegen bei der unteren Abbildung der Fig. 5 die vier Abbildungen des Lichtflecks auf einer zur x-Achse parallelen Linie.

Der obere Teil von Fig. 5 zeigt ein Empfangssignalabbild 40b, welches von einem mit Einzelprismen versehenen Mikrolinsenarray 20 erzeugt wurde, wobei hier die zweite Dimension des Pixelarrays 24, d.h. in y-Richtung, etwas größer als bei dem unteren Empfangssignalabbild 40a ist. Die Ablenkwinkel der den Einzellinsen 22a bis 22d zugeordneten Prismen nehmen von Einzellinse zu Einzellinse jeweils zu, so dass die Abbildung des Lichtflecks mit wachsender x-Position, in Abhängigkeit von der abbildenden Einzellinse, an einer jeweils größeren y-Position des Pixelarrays 24 erfolgt.

Somit ist es auf einfache Weise möglich, unter Kenntnis der y-Position einer bestimmten Abbildung auf dem Pixelarray 24 die Zuordnung zu einer bestimmten Einzellinse 22a bis d des Mikrolinsenarrays 20 vorzunehmen. Als weiterer Vorteil ergibt sich aus der Verwendung von derartigen Einzelprismen eine bessere Trennung benachbarter Abbildungen, da hierdurch der Abstand der Abbildungen voneinander vergrößert ist.

Die dritte, erfindungsgemäße Verfahrensvariante zur Tastabstandsbe-stimmung soll nun anhand von Fig. 4 erläutert werden. Diese Variante entspricht Anspruch 1. In Fig. 4 ist neben den bereits bekannten Empfangssignalmustern 30a bis 30c eine Modulationsfunktion 42 dargestellt, deren Erzeugung aus einem Referenzsignalmuster während eines Einlernvorgangs und nachfolgende Anwendung auf Empfangssignalmuster 30a bis 30c im Folgenden beschrieben wird.

Die Modulationsfunktion M(x) die in Fig. 4 durch das Bezugszeichen 42 dargestellt ist, ergibt sich aus einem Empfangssignalmuster $S_{ref}(x)$, das gemäß Fig. 4 mit dem Empfangssignalmuster 30b identisch ist, nach den folgenden Regeln:

- M(x) nimmt nur die Werte -1 und + 1 ein, stellt also eine Rechteckfunktion dar.
- M(x = 0) sei -1.
- An den Positionen x, an denen $S_{ref}(x)$ ein Maximum aufweist, wechselt M(x) von -1 nach + 1.
- M(x) wechselt an einer Position x von +1 nach -1, die zwischen zwei Maxima gelegen ist und derart bestimmt wird, dass das Verhältnis eines Abstands A zum vorherigen Maximum und eines Abstands B zum nachfolgenden Maximum ein bestimmtes vorgegebenes Verhältnis aufweist. Im vorliegenden Beispiel gemäß Fig. 4 beträgt dieses Verhältnis A:B = 5:2.

Aus der so definierten Modulationsfunktion M(x) und einem Empfangssignalmuster S(x) wird ein Wert D nach der Gleichung:

$$D = \sum_{x=0}^{N} S(x) \cdot M(x)$$

berechnet, wobei N die Anzahl der Pixel des Pixelarrays 24 in Triangulationsrichtung T, d.h. in x-Richtung, ist.

Bildlich gesprochen bedeutet diese Operation, bezogen auf Fig. 4, dass die Anteile der Peaks der Empfangssignalmuster 30a bis 30c, die links von den gestrichelten vertikalen Linien liegen, nach unten umgeklappt werden, zumindest innerhalb des Abstands B. Wendet man die oben genannte Operation auf das Empfangssignalmuster 30b an, das ja als Referenz $S_{ref}(X)$ für die Erzeugung der Modulationsfunktion M(x), 42 gedient hat, ergibt sich für D der Wert 0.

Wendet man die Operation auf das Empfangssignalmuster 30c an, das einem kleineren Tastabstand als beim Referenzsignalmuster 30b entspricht, ergibt sich für D ein positiver Wert. Bildlich kann man sich das so vorstellen, dass hier ein kleinerer Anteil jeder Verteilung negativ und ein größerer Anteil positiv gewichtet werden.

Führt man die besagte Operation hingegen mit dem Empfangssignalmuster 30a aus, welches einem größeren Tastabstand entspricht, ergeben sich für D negative Werte. Auch dies wird aus Fig. 4 deutlich, wenn man sich die links von den gestrichelten Linien liegenden Anteile der jeweiligen Intensitätsverteilungen nach unten umgeklappt denkt.

Nach dieser Verfahrensvariante lässt sich zum einen ein Unter- oder Überschreiten eines Tastabstandsschwellwerts feststellen, der dem der Referenzfunktion $S_{ref}(x)$ zugeordneten Referenztastabstand entspricht. Zum anderen lässt sich aber auch aus dem Wert D ein Tastabstandswert bestimmen, da der Betrag von D mit zunehmender Abweichung von dem Referenztastabstand zunimmt.

Weiterhin ist es möglich, dass die Modulationsfunktion M(x) abschnittsweise auch von + 1 oder -1 abweichende Werte annimmt. Dadurch können artifizielle Abbildungen niedriger gewichtet werden. Es ist auch möglich, durch eine Anpassung der Modulationsfunktion bei der Verwendung von Einzellinsen mit unterschiedlicher Brennweite die Lichtflecke, die insbesondere bei dem während des Einlernvorgangs verwendeten Referenztastabstand scharf abgebildet werden, stärker zu gewichten, oder unscharfe Abbildungen auszublenden. Dadurch wird die Detektion von Gegenständen mit nicht ideal rückstreuender Oberfläche verbessert.

Ferner muss M(x) nicht zwingend eine Rechteckfunktion sein, sondern kann auch Zwischenwerte annehmen. Dies ist insbesondere bei geringerer Ortsauflösung der x-Positionen sinnvoll.

Abschließend soll noch angemerkt werden, dass die hier offenbarten Verfahrensvarianten nicht nur wahlweise angewandt werden können, sondern nebeneinander in dem gleichen Triangulationslichttaster verwirklicht werden können. Ferner können bei bestimmten Verfahrensvarianten aufgeführte Merkmale auch bei anderen Varianten sinnvoll verwirklicht werden.

### Bezugszeichenliste

| | |
|---|---|
| 10 | Triangulationslichttaster |
| 12 | Gehäuse |
| 14 | Lichtquelle |
| 16 | Sendeoptik |
| 18 | Sendestrahlenbündel |
| 20 | Mikrolinsenarray |
| 22 | Einzellinse |
| 22a - 22d | Einzellinse |
| 24 | Pixelarray |
| 26 | Gegenstand |
| 26a - 26c | Gegenstand |
| 28 | rückgestreute Strahlen |
| 28a - 28c | rückgestreute Strahlen |
| 30 | Empfangssignalmuster |
| 30a - 30c | Empfangssignalmuster |
| 32 | Fernbereich |
| 34 | Nahbereich |
| 36 | Störlichtquelle |
| 38 | Störlichtstrahlen |
| 40a, 40b | Empfangssignalabbild |
| 42 | Modulationsfunktion |
| | |
| 301-306 | Lichtfleckabbildung |
| 313, 323 | Nebenmaximum |
| | |
| T | Triangulationsrichtung |
| I | Intensität |
| x | Position |
| y | y-Achse |
| A, B | Abstand |

### Patentansprüche

1. Verfahren zur Erfassung eines Gegenstands (26, 26a, 26b, 26c) mittels einer optoelektronischen Vorrichtung (10), bei dem von einer Lichtquelle (14) erzeugte Lichtstrahlen (18) als Lichtfleck auf einen Gegenstand (26, 26a, 26b, 26c) treffen und die vom Gegenstand (26, 26a, 26b, 26c) rückgestreuten und/oder reflektierten Lichtstrahlen (28, 28a, 28b, 28c) nach dem Triangulationsprinzip von einer Empfangsanordnung erfasst werden und ein eine Information über einen Tastabstand zwischen der Vorrichtung (10) und dem Gegenstand (26, 26a, 26b, 26c) umfassendes Gegenstandserfassungssignal ausgegeben wird, wobei die Lichtstrahlen (28, 28a, 28b, 28c) in der Empfangsanordnung über ein abbildendes Element (20) ein aus Fotodetektoren bestehendes Pixelarray (24) beaufschlagen, wobei das abbildende Element ausschließlich ein dem Pixelarray (24) vorgeschaltetes Array (20) von Einzelabbildungselementen (22a, 22b, 22c, 22d) ist, welches ein einer Mehrzahl von zueinander beabstandeten Abbildungen des Lichtflecks entsprechendes Empfangssignalmuster (30, 30a, 30b, 30c) auf dem Pixelarray erzeugt, und wobei die Information über den Tastabstand aus dem Empfangssignalmuster (30, 30a, 30b, 30c) bestimmt wird,
**dadurch gekennzeichnet,**
**dass** bei einem Referenztastabstand ein Referenzsignalmuster mit mehreren Abbildungen des Lichtflecks entsprechenden Maxima aufgenommen wird, aus dem eine Modulationsfunktion (42) berechnet wird, welche nur entweder einen positiven oder einen negativen Funktionswert annehmen kann, wobei ein Wechsel von einem negativen zu einem positiven Wert an einer Position erfolgt, an der das Referenzsignalmuster ein Maximum aufweist, und ein Wechsel von einem positiven zu einem negativen Wert an einer Position erfolgt, die zwischen diesem Maximum und einem benachbarten Maximum liegt und durch einen Bruchteil des Abstandes der beiden Maxima bestimmt ist, dass das Produkt des Empfangssignalmusters (30, 30a, 30b, 30c) mit der Modulationsfunktion (42) berechnet wird,
**dass** die Summe oder das Integral über das Produkt für ein vorgebbares Intervall von Positionen berechnet wird, und
**dass** als Information über den Tastabstand aus der Summe oder dem Integral der Tastabstandswert berechnet wird oder aus dem Vorzeichen der Summe oder des Integrals ein Unterschreiten und/oder Überschreiten eines insbesondere durch den Referenztastabstand vorgegebenen Tastabstandsschwellwerts ermittelt wird.

2. Verfahren nach Anspruch 1,
**dadurch gekennzeichnet,**
**dass** der positive und der negative Wert der Modulationsfunktion (42) ihrem Betrag nach gleich sind, oder der positive und/oder der negative Wert der Modulationsfunktion (42) für verschiedene Abschnitte unterschiedlich sind.

3. Verfahren nach einem der vorhergehenden Ansprüche,
**dadurch gekennzeichnet,**
**dass** die Position einer Abbildung des Lichtflecks aus dem Maximum und/oder dem Schwerpunkt der Intensitätsverteilung der Abbildung des Lichtflecks bestimmt wird.

4. Verfahren nach einem der vorhergehenden Ansprüche,
**dadurch gekennzeichnet,**
**dass** das Pixelarray (24) ein zweidimensionales Array ist,
**dass** ein Einzelabbildungselement (22a, 22b, 22c, 22d) jeweils ein Prisma umfasst, wobei die Ablenkrichtung der Prismen senkrecht zu einer durch die Sende- und Empfangsstrahlen definierten Triangulationsebene ist und der Betrag der Ablenkung für jedes Einzelabbildungselement (22a) unterschiedlich ist, und
**dass** eine Abbildung aufgrund ihrer Position (y) in der Ablenkrichtung einem Einzelabbildungselement (22a, 22b, 22c, 22d) zugeordnet wird.

5. Verfahren nach einem der vorhergehenden Ansprüche,
**dadurch gekennzeichnet,**
**dass** Abbildungen des Lichtflecks, die in ihrer Intensitätsverteilung von einem vorgegebenen Muster abweichen, ermittelt werden, wobei insbesondere die von dem Muster abweichenden Abbildungen des Lichtflecks bei der Bestimmung der Information über den Tastabstand nicht oder mit einer verminderten Gewichtung berücksichtigt werden.

6. Verfahren nach Anspruch 5,
**dadurch gekennzeichnet,**
**dass** bei Überschreitung eines vorgegebenen Grenzwerts für das zulässige Maß an von dem Muster abweichenden Abbildungen des Lichtflecks eine Fehlermeldung ausgegeben wird und/oder eine Ausgabe eines Gegenstandserfassungssignals solange unterbleibt, bis das zulässige Maß an von dem Muster abweichenden Abbildungen wieder unterschritten ist.

7. Optoelektronische Vorrichtung (10) zur Erfassung eines Gegenstands (26, 26a, 26b, 26c) nach dem Triangulationsprinzip mit einer Lichtquelle (14) zur Erzeugung eines Lichtflecks auf dem Gegenstand, einer Empfangsanordnung zur Detektion von von einem Gegenstand rückgestreuten und/oder reflektierten Lichtstrahlen (28, 28a, 28b, 28c) und einer Auswerteeinheit,
wobei die Empfangsanordnung ein die Lichtstrahlen abbildendes Element (20) sowie ein aus Fotodetektoren bestehendes Pixelarray (24) aufweist;
wobei das abbildende Element (20) ausschließlich ein dem Pixelarray (24) vorgeschaltetes Array (20) von Einzelabbildungselementen (22a, 22b, 22c, 22d) ist, welches zum Erzeugen eines einer Mehrzahl von zueinander beabstandeten Abbildungen des Lichtflecks entsprechenden Empfangssignalmusters (30, 30a, 30b, 30c) auf dem Pixelarray ausgebildet ist, und
wobei die Auswerteeinheit zur Bestimmung einer Information über einen Tastabstand zwischen der Vorrichtung und dem Gegenstand (26, 26a, 26b, 26c) aus dem Empfangssignalmuster (30, 30a, 30b, 30c) ausgelegt ist,
**dadurch gekennzeichnet,**
**dass** die Auswerteeinheit dazu ausgelegt ist,
**dass** bei einem Referenztastabstand ein Referenzsignalmuster mit mehreren Abbildungen des Lichtflecks entsprechenden Maxima aufgenommen wird, aus dem eine Modulationsfunktion (42) berechnet wird, welche nur entweder einen positiven oder einen negativen Funktions wert annehmen kann, wobei ein Wechsel von einem negativen zu einem positiven Wert an einer Position erfolgt, an der das Referenzsignalmuster ein Maximum aufweist, und ein Wechsel von einem positiven zu einem negativen Wert an einer Position erfolgt, die zwischen diesem Maximum und einem benachbarten Maximum liegt und durch einen Bruchteil des Abstandes der beiden Maxima bestimmt ist,

**dass** das Produkt des Empfangssignalmusters (30, 30a, 30b, 30c) mit der Modulationsfunktion (42) berechnet wird,

**dass** die Summe oder das Integral über das Produkt für ein vorgebbares Intervall von Positionen berechnet wird, und

**dass** als Information über den Tastabstand aus der Summe oder dem Integral der Tastabstandswert berechnet wird oder aus dem Vorzeichen der Summe oder des Integrals ein Unterschreiten und/oder Überschreiten eines insbesondere durch den Referenztastabstand vorgegebenen Tastabstandsschwellwerts ermittelt wird.

8. Vorrichtung nach Anspruch 7,
   **dadurch gekennzeichnet,**
   **dass** das Array (20) von Einzelabbildungselementen ein eine Mehrzahl von Einzellinsen (22a, 22b, 22c, 22d) umfassendes Mikrolinsenarray (20) umfasst, oder dass das Array (20) von Einzelabbildungselementen ein Array von diffraktiven Einzelelementen umfasst, welches insbesondere als eine Folie ausgebildet ist.

9. Vorrichtung nach einem der Ansprüche 7 oder 8,
   **dadurch gekennzeichnet,**
   **dass** die Einzelabbildungselemente (22a, 22b, 22c, 22d) unterschiedliche Brennweiten aufweisen und/oder dass ein Einzelabbildungselement (22a, 22b, 22c, 22d) jeweils ein Prisma umfasst, wobei insbesondere die Ablenkrichtung der Prismen senkrecht zu einer durch die Sende- und Empfangsstrahlen (18, 28, 28a, 28b, 28c) definierten Triangulationsebene ist.

10. Vorrichtung nach Anspruch 9,
    **dadurch gekennzeichnet,**
    **dass** das Maß der Ablenkung für verschiedene Prismen unterschiedlich ist und sich bevorzugt in der Richtung (T) der Triangulation verändert.

11. Vorrichtung nach einem der Ansprüche 7 bis 10,
    **dadurch gekennzeichnet ,**
    **dass** das Array (20) von Einzelabbildungselementen eindimensional ist und sich in Richtung (T) der Triangulation erstreckt.

12. Vorrichtung nach einem der Ansprüche 7 bis 11,
    **dadurch gekennzeichnet,**
    **dass** das Pixelarray (24) eindimensional oder zweidimensional ist und/oder das Pixelarray (24) ein Fotodiodenarray oder ein CCD-Sensor oder ein CMOS-Sensor ist.

## Claims

1. A method for the detection of an object (26, 26a, 26b, 26c) by means of an optoelectronic apparatus (10), wherein light rays (18) generated by a light source (14) are incident at an object (26, 26a, 26b, 26c) as a light spot and the light rays (28, 28a, 28b, 28c) scattered back and/or reflected from the object (26, 26a, 26b, 26c) are detected by a receiver arrangement in accordance with the triangulation principle and an object detection signal including information on a scanning distance between the apparatus (10) and the object (26, 26a, 26b, 26c) is output, with the light rays (28, 28a, 28b, 28c) acting on a pixel array (24) comprising photodetectors via an imaging element (20) in the receiver arrangement, wherein the imaging element is only an array (20) of individual imaging elements (22a, 22b, 22c, 22d) positioned before the pixel array (24), said array (20) generating a received signal pattern (30, 30a, 30b, 30c) on the pixel array corresponding to a plurality of mutually spaced apart images of the light spot; and wherein the information on the scanning distance is determined from the received signal pattern (30, 30a, 30b, 30c),
   **characterized in that**
   a reference signal pattern having maxima corresponding to a plurality of images of the light spot is taken at a reference scanning spacing and a modulation function (42) is calculated from it which can adopt either only a positive functional value or a negative functional value, with a change from a negative value to a positive value taking place at a position at which the reference signal pattern has a maximum and a change from a positive value to a negative value taking place at a position which lies between this maximum and an adjacent maximum and is determined by a fraction of the spacing of the two maxima;
   **in that** the product of the received signal pattern (30, 30a, 30b, 30c) is calculated with the modulation function (42);
   **in that** the sum or the integral is calculated over the product for a predefinable interval of positions; and
   **in that** the scanning distance value is calculated as the information on the scanning distance from the sum or from the integral or a falling short of and/or exceeding of a scanning distance threshold value, in particular predefined by the reference scanning distance, is determined from the sign of the sum or of the integral.

2. A method in accordance with claim 1, **characterized in that** the positive value and the negative value of the modulation function (42) are equal in amount or the positive value and/or the negative value of the modulation function (42) are different for different sections.

3. A method in accordance with one of the preceding claims, **characterized in that** the position of an image of the light spot is determined from the maximum and/or from the focal point of the intensity distribution of the image of the light spot.

4. A method in accordance with any one of the preceding claims, **characterized in that** the pixel array (24) is a two-dimensional array; **in that** an individual imaging element (22a, 22b,22c, 22d) each includes a prism, with the deflection direction of the prism being perpendicular to a triangulation plane defined by the transmitted and received rays and the amount of the deflection being different for each individual imaging element (22a); and **in that** an image is associated with an individual imaging element (22a, 22b, 22c, 22d) on the basis of its position (y) in the deflection direction.

5. A method in accordance with any one of the preceding claims, **characterized in that** images of the light spot are determined which differ in their intensity distribution from a predefined pattern, wherein in particular the images of the light spot differing from the pattern are not taken into account on the determination of the information on the scanning distance or are taken into account with a reduced weighting.

6. A method in accordance with claim 5, **characterized in that** an error message is output on the exceeding of a predefined limit value for the permitted degree of images of the light spot differing from the pattern and/or an output of an object detection signal is suppressed for so long until the permitted degree of images differing from the pattern is fallen below again.

7. An optoelectronic apparatus (10) for the detection of an object (26, 26a, 26b, 26c) in accordance with the triangulation principle having a light source (14) for the generation of a light spot on the object, a receiver arrangement for the detection of light rays (28, 28a, 28b, 28c) scattered back and/or reflected from an object and an evaluation unit,
wherein the receiver arrangement has an element (20) imaging the light rays as well as a pixel array (24) comprising photodetectors, wherein the imaging element (20) is only an array (20) of individual imaging elements (22a, 22b, 22c, 22c) positioned before the pixel array (24), said array (20) being made for the generation of a received signal pattern (30, 30a, 30b, 30c) on the pixel array corresponding to a plurality of mutually spaced apart images of the light spot; and
wherein the evaluation unit is designed for the determination of information on a scanning distance between the apparatus and the object (26, 26a, 26b, 26c) from the received signal pattern (30, 30a, 30b, 30c),
**characterized in that**
the evaluation unit is configured such that
a reference signal pattern having maxima corresponding to a plurality of images of the light spot is taken at a reference scanning spacing and a modulation function (42) is calculated from it which can adopt either only a positive functional value or a negative functional value, with a change from a negative value to a positive value taking place at a position at which the reference signal pattern has a maximum and a change from a positive value to a negative value taking place at a position which lies between this maximum and an adjacent maximum and is determined by a fraction of the spacing of the two maxima;
that the product of the received signal pattern (30, 30a, 30b, 30c) is calculated with the modulation function (42);
that the sum or the integral is calculated over the product for a predefinable interval of positions; and
that the scanning distance value is calculated as the information on the scanning distance from the sum or from the integral or a falling short of and/or exceeding of a scanning distance threshold value, in particular predefined by the reference scanning distance, is determined from the sign of the sum or of the integral.

8. An apparatus in accordance with claim 7, **characterized in that** the array (20) of individual imaging elements includes a microlens array (20) including a plurality of individual lenses (22a, 22b, 22c, 22d); or **in that** the array (20) of individual imaging elements includes an array of diffractive individual elements which is in particular made as a film.

9. An apparatus in accordance with one of the claims 7 or 8, **characterized in that** the individual imaging elements (22a, 22b, 22c, 22d) have different focal lengths; and/or n that an individual imaging element (22a, 22b, 22c, 22c) each includes a prism, wherein in particular the deflection direction of the prisms is perpendicular to a triangulation plane defined by the transmitted rays and received rays (18, 28, 28a, 28b, 28c).

10. An apparatus in accordance with claim 9,
**characterized in that**
the degree of deflection is different for different prisms and preferably varies in the direction (T) of the triangulation.

11. An apparatus in accordance with any one of the claims 7 to 10,
**characterized in that**
the array (20) of individual imaging elements is one-dimensional and extends in the direction (T) of the triangulation.

12. An apparatus in accordance with any one of the claims 7 to 11,
**characterized in that**
the pixel array (24) is one-dimensional or two-dimensional; and/or the pixel array (24) is a photodiode array or a CCD sensor or a CMOS sensor.

**Revendications**

1. Procédé pour la détection d'un objet (26, 26a, 26b, 26c) au moyen d'un dispositif optoélectronique (10), dans lequel des rayons de lumière (18) engendrés par une source de lumière (14) tombent sous forme d'une tache de lumière sur un objet (26, 26a, 26b, 26c) et les rayons de lumière (28, 28a, 28b, 28c) diffusés en retour et/ou réfléchis par l'objet (26, 26a, 26b, 26c) sont détectés selon le principe de triangulation par un agencement récepteur et une information est délivrée via un signal de détection d'objet qui inclut une distance de palpage entre le dispositif (10) et l'objet (26, 26a, 26b, 26c), dans lequel les rayons de lumière (28, 28a, 28b, 28c) excitent dans l'agencement récepteur et via un élément d'imagerie (20) un réseau de pixels (24) constitué de photodétecteurs, ledit élément d'imagerie étant exclusivement un réseau (20), disposé en avant du réseau de pixels (24), d'éléments d'imagerie individuelle (22a, 22b, 22c, 22d), qui engendrent sur le réseau de pixels un motif de signal de réception (30, 30a, 30b, 30c) correspondant à une pluralité d'images écartées les unes des autres de la tache lumineuse, et dans lequel l'information concernant la distance de palpage est déterminée à partir du motif de signal de réception (30, 30a, 30b, 30c),
**caractérisé en ce que**
pour une distance de palpage de référence, on enregistre un motif de signal de référence avec des maxima correspondants à plusieurs images de la tache de lumière, motif à partir duquel on calcule une fonction de modulation (42) qui peut uniquement prendre soit une valeur de fonction positive soit une valeur de fonction négative, de sorte qu'un changement d'une valeur négative à une valeur positive se produit a une position à laquelle le motif de signal de référence présente un maximum, et un changement d'une valeur positive à une valeur négative se produit à une position qui est située entre ce maximum et un maximum voisin et est déterminée par une fraction de la distance des deux maxima,
**en ce que** le produit du motif de signal de réception (30, 30a, 30b, 30c) par la fonction de modulation (42) est calculé,
**en ce que** la somme ou l'intégrale sur le produit est calculée pour un intervalle prédéterminé de positions, et
**en ce que** la valeur de distance de palpage est calculée comme information sur la distance de palpage à partir de la somme ou de l'intégrale, ou **en ce que** l'on détermine à partir du signe de la somme ou de l'intégrale un passage au-dessous et/ou au-dessus d'une valeur seuil de distance de palpage prédéterminée en particulier par la distance de palpage de référence.

2. Procédé selon la revendication 1,
**caractérisé en ce que** la valeur positive et la valeur négative de la fonction de modulation (42) sont égales en valeur absolue, ou **en ce que** la valeur positive et/ou la valeur négative de la fonction de modulation (42) sont différentes pour des portions différentes.

3. Procédé selon l'une des revendications précédentes,
**caractérisé en ce que** la position d'une image de la tache de lumière est déterminée à partir du maximum et/ou du barycentre de la répartition d'intensité de l'image de la tache de lumière.

4. Procédé selon l'une des revendications précédentes,
**caractérisé en ce que** le réseau de pixels (24) est un réseau bidimensionnel,
**en ce qu'**un élément d'imagerie individuel (22a, 22b, 22c, 22b) comprend respectivement un prisme, dans lequel la direction de déflexion des prismes est perpendiculaire à un plan de triangulation défini par les rayons émis et par les rayons reçus, et la valeur de la déflexion est différente pour chaque élément d'imagerie individuel (22a), et
**en ce qu'**une image est associée à un élément d'imagerie individuel (22a, 22b, 22c, 22d) sur la base de sa position (y) dans la direction de déflexion.

5. Procédé selon l'une des revendications précédentes,
**caractérisé en ce que** l'on détermine des images de la tache de lumière qui, dans leur répartition d'intensité, s'écartent d'un motif prédéterminé, et lors de la détermination des informations sur la distance de palpage, les images de la tache de lumière s'écartant du motif ne sont pas prises en compte ou bien le sont avec une pondération réduite.

6. Procédé selon la revendication 5,
**caractérisé en ce que**, en cas de dépassement d'une valeur limite prédéterminée pour la mesure admissible d'images de la tache de lumière s'écartant du motif, on délivre un message d'erreur et/ou **en ce que** l'on inhibe la délivrance d'un signal de détection d'objet jusqu'à ce que l'on passe à nouveau au-dessous de la mesure admissible d'images s'écartant du motif.

7. Dispositif optoélectronique (10) pour la détection d'un objet (26, 26a, 26b, 26c) selon le principe de triangulation comprenant une source de lumière (14) pour engendrer une tache de lumière sur l'objet, un agencement récepteur pour la détection de rayons de lumière (28, 28a, 28b, 28c) diffusés en retour et/ou réfléchis par un objet, et une unité d'évaluation, dans lequel l'agencement de réception comprend un élément (20) formant une image des rayons de lumière, ainsi qu'un réseau de pixels (24) constitué de photodétecteurs ;
dans lequel l'élément d'imagerie (20) est exclusivement un réseau (20), disposé en avant du réseau de pixels (24), d'éléments d'imagerie individuelle (22a, 22b, 22c, 22d), lequel est réalisé pour engendrer sur le réseau de pixels un motif de signal de réception (30, 30a, 30b, 30c) correspondant à une pluralité d'images écartées les unes des autres de la tache de lumière, et
dans lequel l'unité d'évaluation est conçue pour la détermination d'une information sur une distance de palpage entre le dispositif et l'objet (26, 26a, 26b, 26c) à partir du motif de signal de réception (30, 30a, 30b, 30c),
**caractérisé en ce que**
l'unité d'évaluation est conçue de telle manière que pour une distance de palpage de référence, elle enregistre un motif de signal de référence avec des maxima correspondants à plusieurs images de la tache de lumière, motif à partir duquel une fonction de modulation (42) est calculée, qui peut uniquement prendre une valeur de fonction soit positif soit négative, et un changement d'une valeur négative à une valeur positive se produit à une position à laquelle le motif de signal de référence présente un maximum, et un changement d'une valeur positive à une valeur négative se produit à une position qui se trouve entre ce maximum et un maximum voisin, et est déterminée par une fraction de la distance des deux maxima,
**en ce que** le produit du motif de signal de réception (30, 30a, 30b, 30c) par la fonction de modulation (42) est calculé,
**en ce que** la somme ou l'intégrale sur le produit est calculée pour un intervalle prédéterminé de positions, et
la valeur de distance de palpage est calculée à titre d'information sur la distance de palpage à partir de la somme ou de l'intégrale, ou un passage au-dessous et/ou un passage au-dessus d'une valeur seuil de distance de palpage, prédéterminé en particulier par la distance de palpage référence, est déterminé à partir du signe de la somme ou de l'intégrale.

8. Dispositif selon la revendication 7,
**caractérisé en ce que** le réseau (20) d'éléments d'imagerie individuels comprend un réseau de microlentilles (20) comprenant une pluralité de lentilles individuelles (22a, 22b, 22c, 22d), ou **en ce que** le réseau (20) d'éléments d'imagerie individuels comprend un réseau d'éléments individuels à diffraction, qui est réalisé en particulier comme un film.

9. Dispositif selon l'une des revendications 7 ou 8,
**caractérisé en ce que** les éléments d'imagerie individuels (22a, 22b, 22c, 22d) présentent des distances focales différentes et/ou **en ce qu'**un élément d'imagerie individuel (22a, 22b, 22c, 22d) comprend respectivement un prisme, et la direction de déflexion des prismes est en particulier perpendiculaire à un plan de triangulation défini par les rayons émis et par les rayons reçus (18, 28, 28a, 28b, 28c).

10. Dispositif selon la revendication 9,
**caractérisé en ce que** la mesure de la déflexion est différente pour différents prismes et se modifie de préférence dans la direction (T) de la triangulation.

11. Dispositif selon l'une des revendications 7 à 10,
**caractérisé en ce que** le réseau (20) d'éléments d'imagerie individuels est monodimensionnel et s'étend en direction (T) de la triangulation.

12. Dispositif selon l'une des revendications 7 à 11,
**caractérisé en ce que** le réseau de pixels (24) est monodimensionnel ou bidimensionnel et/ou **en ce que** le réseau de pixels (24) est un réseau de photodiodes ou un capteur CCD ou encore un capteur CMOS.

# Fig. 1

# Fig. 2

## Fig. 3

## Fig. 4

## Fig. 5

**EP 1 953 504 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5076687 A
- FR 2761151 A1
- US 63544893 B1